# FASCICULE DE BREVET EUROPEEN

(11) **EP 4 242 489 B1**
(45) Date de publication et mention de la délivrance du brevet: **18.12.2024**
(21) Numéro de dépôt: 23159300.5
(22) Date de dépôt: 01.03.2023
(51) Int. Cl.: F16H 1/36, F16H 57/04, F16H 57/08

(54) **REDUCTEUR MECANIQUE DE TURBOMACHINE D'AERONEF**
MECHANISCHES REDUKTIONSGETRIEBE FÜR FLUGZEUGTURBOMASCHINE
MECHANICAL REDUCTION GEAR FOR AN AIRCRAFT TURBINE ENGINE

(30) Priorité: 10.03.2022 FR 2202118
(43) Date de publication de la demande: 13.09.2023
(73) Titulaire: Safran Transmission Systems, 92700 Colombes (FR)
(72) Inventeur: PAP, Bálint, 77550 MOISSY-CRAMAYEL (FR); JARROUX, Clément, 77550 MOISSY-CRAMAYEL (FR); MEDECIN, Pierre Gilbert Claude, 77550 MOISSY-CRAMAYEL (FR); MOULY, Guillaume Pierre, 77550 MOISSY-CRAMAYEL (FR)
(74) Mandataire: Gevers & Orès

(56) Documents cités:
- EP-A1- 3 093 514
- EP-A1- 3 396 187
- EP-A1- 3 726 097
- EP-A1- 3 922 886
- FR-A1- 3 041 054

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, EP-A1-3 922 886, EP-A1-3 726 097, FR-A1-3 008 462 et FR-A1-3 041 054.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Par ailleurs, chaque satellite est centré et guidé en rotation autour d'un axe par un palier qui est porté par le porte-satellites. Il existe plusieurs technologies de palier pour cette application et la présente demande concerne plus spécifiquement l'utilisation de paliers hydrodynamiques de guidage des satellites dans un réducteur mécanique.

Dans la présente demande, on entend par « palier hydrodynamique », un palier comportant un corps engagé dans un satellite et autour duquel est situé un film d'huile sous pression. Dans l'état de la technique, un palier hydrodynamique de satellite comprend un corps cylindrique comportant une surface cylindrique externe qui s'étend à l'intérieur d'une surface cylindrique interne du satellite. Le film d'huile sous pression est intercalé entre ces surfaces et permet de ne pas avoir de contact entre ses surfaces.

Un des désavantages de ce type de réducteur est lié à la dimension axiale relativement importante des satellites qui reprennent des charges importantes générées par la transmission du couple au niveau des engrènements, ainsi que par les effets centrifuges appliqués aux satellites dans le cas d'un réducteur épicycloïdal. Les paliers qui supportent les satellites et les guident en rotation sont donc chargés et il y a peu de place pour les intégrer sans augmenter considérablement l'encombrement du réducteur.

Il serait possible d'utiliser comme paliers des roulements à éléments roulants. Cependant, les roulements ont une capacité de charge qui ne permet pas de les placer sous les dentures des satellites, il faut alors les placer à l'extérieur des satellites pour leur conférer un diamètre suffisant, ce qui augmente considérablement l'encombrement du réducteur.

Du point de vue de l'encombrement, il est donc préférable d'utiliser des paliers lisses ou paliers hydrodynamiques qui ont des capacités de charge plus élevées. Cela permet de placer les paliers sous les dentures du satellite, c'est-à-dire dans un espace de faible diamètre et long axialement. Un palier hydrodynamique est en général alimenté en huile par son milieu et cette huile est évacuée par ses extrémités axiales. Il est aisé de concevoir un palier long qui s'étend sur toute la longueur du satellite. Un tel palier a une capacité de charge supérieure au minimum requis et demande un débit d'huile important puisque ce débit dépend entre autre de la longueur du palier. Ce type de palier génère également des pertes de puissance importantes. Or, pour avoir un réducteur efficace, le débit d'huile demandé et les pertes de puissance doivent être les plus faibles possible.

La circulation de l'huile des paliers doit donc être gérée avec précision autant en ce qui concerne l'alimentation en huile des paliers que l'évacuation de cette huile.

L'invention propose ainsi un perfectionnement à cette technologie en particulier en ce qui concerne l'évacuation de l'huile de fonctionnement des paliers hydrodynamiques, pour des satellites à double étage d'engrènement.

### Résumé de l'invention

L'invention concerne un réducteur mécanique de turbomachine, en particulier d'aéronef, ce réducteur comportant un réducteur mécanique de turbomachine, en particulier d'aéronef, ce réducteur comportant :
- un solaire ayant un premier axe de rotation,
- une couronne qui s'étend autour du solaire et dudit premier axe,
- des satellites qui sont engrenés avec le solaire et la couronne, chaque satellite ayant un second axe de rotation et comportant une première denture ayant un premier diamètre moyen pour l'engrènement avec le solaire, et une seconde denture ayant un second diamètre moyen pour l'engrènement avec la couronne, les premier et second diamètres moyens étant différents,
- des paliers hydrodynamiques de guidage en rotation des satellites, ces paliers hydrodynamiques étant portés par un porte-satellites et comprenant des corps cylindriques qui ont une forme générale allongée le long dudit second axe et qui sont engagés dans les satellites, chacun de ces corps cylindriques comportant une cavité interne de circulation d'huile et des première canalisations d'acheminement d'huile depuis cette cavité jusqu'à au moins une surface cylindrique externe du corps s'étendant autour dudit second axe, de façon à former au moins un film d'huile de guidage du satellite monté sur ce corps,
caractérisé en ce que chacun des corps cylindriques comprend en outre des secondes canalisations d'évacuation d'huile, qui sont différentes des premières canalisations, et qui s'étendent depuis ladite au moins une surface cylindrique externe jusqu'à au moins une des extrémités longitudinales de ce corps.

L'invention propose ainsi d'équiper chacun des corps cylindriques de deux types de canalisations, à savoir des canalisations d'alimentation en huile et des canalisations d'évacuation d'huile. Ces canalisations sont indépendantes donc l'alimentation en huile des films d'huile ne risquent pas de perturber l'évacuation d'huile de ces films. L'alimentation en huile est réalisée depuis la cavité interne de chacun des corps cylindriques, et l'évacuation de l'huile est réalisée aux extrémités longitudinales du corps et donc du palier.

L'invention est particulièrement avantageuse dans le cadre de la lubrification et en particulier de l'évacuation de l'huile de lubrification de satellites à double étage d'engrènement.

Le réducteur selon l'invention peut comprendre une ou plusieurs des caractéristiques suivantes, prises isolément les unes des autres, ou en combinaison les unes avec les autres :
- chacun des corps cylindriques comprend une gorge annulaire externe qui est située dans ledit plan et qui est située entre deux surfaces cylindriques externes du corps, lesdites secondes canalisations débouchant au fond de ladite gorge ;
- les secondes canalisations comprennent chacune un orifice radial formé au fond de la gorge, et au moins une portion rectiligne qui est reliée à cet orifice et qui s'étend jusqu'à au moins une des extrémités longitudinales du corps ;
   -- la portion rectiligne de chacune des secondes canalisations est parallèle audit second axe ou inclinée par rapport à cet axe ;
- les portions rectilignes des secondes canalisations sont situées sur une circonférence centrée sur ledit second axe, qui a un diamètre supérieur à un diamètre maximal de ladite cavité ;
- chacun des corps cylindriques comprend une rainure annulaire à chacune de ses extrémités longitudinales, ces rainures annulaires débouchant en direction axiale et les portions rectilignes des secondes canalisations débouchant au fond de ces rainures ;
- chacun des corps cylindriques comprend au moins un raidisseur interne dans ladite cavité, qui est parallèle ou perpendiculaire audit second axe ;
- les secondes canalisations comprennent chacune un orifice radial formé au fond de la gorge et s'étendant jusqu'audit second axe, et une portion rectiligne qui est relié à cet orifice et s'étend jusqu'à au moins une des extrémités longitudinales du corps ;
- l'orifice radial et la portion rectiligne de chacune des secondes canalisations sont au moins en partie formés dans ledit raidisseur ;
- ledit raidisseur s'étend jusqu'aux extrémités axiales du corps ; en variante, il s'étend jusqu'à distance des extrémités axiales du corps ;
- les premières canalisations sont symétriques par rapport audit plan de façon à générer deux films d'huile de guidage du satellite sur chaque corps ;
- chacun des satellites comprend un manchon cylindrique qui a une forme générale allongée le long dudit second axe et un voile annulaire s'étendant sensiblement radialement vers l'extérieur depuis le milieu de ce manchon, les dents de la seconde denture étant situées aux extrémités axiales du manchon, et les dents de la première denture étant situées à la périphérie externe du voile ;
- le manchon comprend deux surfaces cylindriques internes de guidage séparées l'une de l'autre par une gorge annulaire interne située sensiblement dans ledit plan ;
- le manchon comprend des canalisations d'évacuation d'huile qui comprennent chacune un orifice radial formé au fond de la gorge, et au moins une portion rectiligne qui est reliée à cet orifice et s'étend jusqu'à au moins une des extrémités longitudinales du manchon ;
- le manchon comprend un alésage cylindrique à chacune de ses extrémités longitudinales, ces alésages étant symétriques par rapport audit plan et comportant un diamètre interne qui est supérieur au diamètre interne desdites surfaces cylindriques internes ;
- les portions rectilignes des canalisations sont situées sur une circonférence centrée sur ledit second axe, qui a un diamètre supérieur au diamètre interne des surfaces cylindriques internes et inférieur audit second diamètre moyen ;
- les deux séries de dents de la seconde denture sont disposées respectivement autour desdits alésages ;
- chacun des satellites est guidé par deux paliers hydrodynamiques indépendants l'un de l'autre et disposés de part et d'autre dudit plan ;
   -- lesdits deux paliers hydrodynamiques sont situés respectivement au droit des séries de dents de la seconde denture ;
   -- chacun des satellites est traversé par un unique corps cylindrique définissant lesdits deux paliers hydrodynamiques ;
   -- la première denture comprend une unique série de dents ; en variante, la première denture comprend deux séries de dents qui sont disposées de part et d'autre dudit plan ;
   -- la seconde denture comprend deux séries de dents qui sont disposées de part et d'autre dudit plan et de la première denture ;
   -- les première et seconde dentures de chaque satellite présentent une symétrie par rapport à un plan perpendiculaire audit premier axe et passant sensiblement au milieu du satellite.

La présente invention concerne également un réducteur mécanique de turbomachine, en particulier d'aéronef, ce réducteur comportant :
- un solaire ayant un premier axe de rotation,
- une couronne qui s'étend autour du solaire et dudit premier axe,
- des satellites qui sont engrenés avec le solaire et la couronne, chaque satellite ayant un second axe de rotation et comportant une première denture ayant un premier diamètre moyen pour l'engrènement avec le solaire, et une seconde denture ayant un second diamètre moyen pour l'engrènement avec la couronne, les premier et second diamètres moyens étant différents, chacun des satellites comprenant un manchon cylindrique qui a une forme générale allongée le long dudit second axe et un voile annulaire s'étendant sensiblement radialement vers l'extérieur depuis le milieu de ce manchon, des dents de la seconde denture étant situées aux extrémités axiales du manchon, et des dents de la première denture étant situées à la périphérie externe du voile,
- des paliers hydrodynamiques de guidage en rotation des satellites, ces paliers hydrodynamiques étant portés par un porte-satellites et comprenant des corps cylindriques qui ont une forme générale allongée le long dudit second axe et qui sont engagés dans les satellites, chacun de ces corps cylindriques comportant une cavité interne de circulation d'huile et des première canalisations d'acheminement d'huile depuis cette cavité jusqu'à au moins une surface cylindrique externe du corps, ladite au moins une surface cylindrique externe du corps s'étendant autour dudit second axe et à l'intérieur d'au moins une surface cylindrique interne du manchon du satellite monté autour de ce corps, de façon à former au moins un film d'huile de guidage du satellite monté sur ce corps,
caractérisé en ce que le manchon de chacun des satellites comprend des canalisations d'évacuation d'huile qui s'étendent depuis ladite moins une surface cylindrique interne du manchon jusqu'à au moins une des extrémités longitudinales de ce manchon.

Avantageusement, les première et seconde dentures de chaque satellite présentent une symétrie par rapport à un plan perpendiculaire audit premier axe et passant sensiblement au milieu du satellite,
L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une autre vue partielle en coupe axiale d'un réducteur mécanique, et illustre la technique antérieure à la présente invention, [Fig.4] la figure 4 est une vue schématique en coupe axiale et en perspective d'un réducteur à double étage d'engrènement symétrique, et illustre également la technique antérieure à la présente invention,
[Fig.5] la figure 5 est une autre vue schématique en coupe axiale du réducteur de la figure 4 ;
[Fig.6] la figure 6 est une vue schématique en coupe axiale d'un satellite et d'un corps cylindrique de palier hydrodynamique, pour un réducteur selon un mode de réalisation de l'invention,
[Fig.7] la figure 7 est une vue schématique en coupe axiale d'un satellite selon une variante de réalisation de l'invention,
[Fig.8] la figure 8 est une vue schématique en perspective du satellite de la figure 7,
[Fig.9] la figure 9 est une vue schématique en perspective d'un corps cylindrique de palier hydrodynamique selon une variante de réalisation de l'invention,
[Fig.10] la figure 10 est une vue schématique en coupe du corps de la figure 9,
[Fig.11] la figure 11 est une vue schématique en perspective d'un corps cylindrique de palier hydrodynamique selon une variante de réalisation de l'invention,
[Fig.12] la figure 12 est une vue schématique en coupe du corps de la figure 11,
[Fig.13] la figure 13 est une vue schématique en perspective d'un corps cylindrique de palier hydrodynamique selon une variante de réalisation de l'invention,
[Fig.14] la figure 14 est une vue schématique en coupe du corps de la figure 13,
[Fig.15] la figure 15 est une vue schématique de côté d'un corps cylindrique de palier hydrodynamique selon une variante de réalisation de l'invention [Fig.16] la figure 16 est une vue schématique en perspective d'un corps cylindrique de palier hydrodynamique selon une variante de réalisation de l'invention, et
[Fig.17] la figure 17 est une vue schématique en coupe d'un corps cylindrique de palier hydrodynamique selon une variante de réalisation de l'invention.

### Description détaillée de l'invention

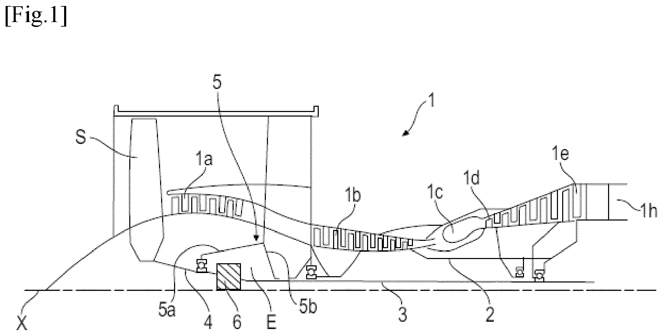

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

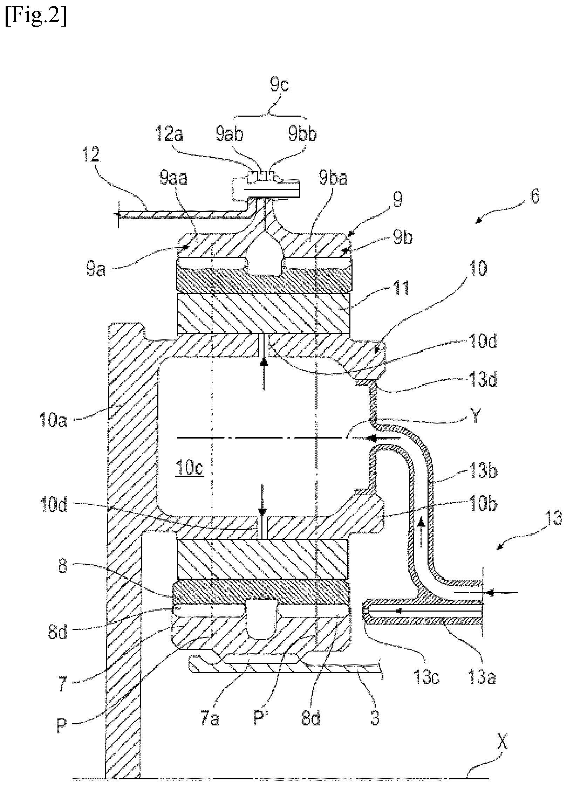

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
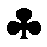 Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
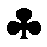 Dans une autre configuration planétaire, l'ensemble des satellites 8 est maintenu par un porte-satellites 10 qui est fixé au carter moteur ou stator 5. Chaque satellite 8 entraine la couronne qui est rapportée à l'arbre de soufflante 4 via un porte-couronne 12.
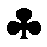 Dans une autre configuration différentielle, l'ensemble des satellites 8 est maintenu par un porte-satellites 10 qui est relié à un premier arbre de soufflante 5. Chaque satellite 8 entraine la couronne qui est rapportée à un second arbre de soufflante contrarotatif 4 via un porte-couronne 12. Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
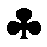 Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
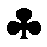 Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur 6 à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

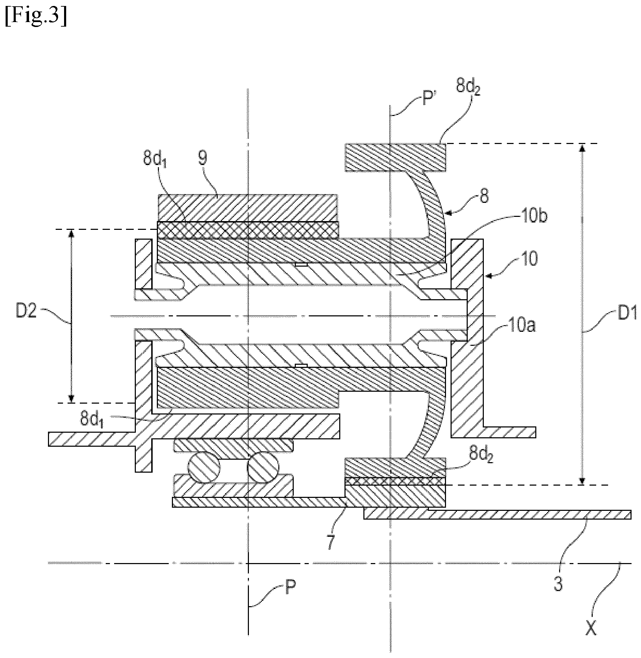

La figure 3 montre un autre exemple d'architecture de réducteur, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9 a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice.

Comme évoqué dans ce qui précède, cette architecture « double étage » génère des moments non négligeables au niveau des satellites 8 en particulier car ce double étage est à denture asymétrique.

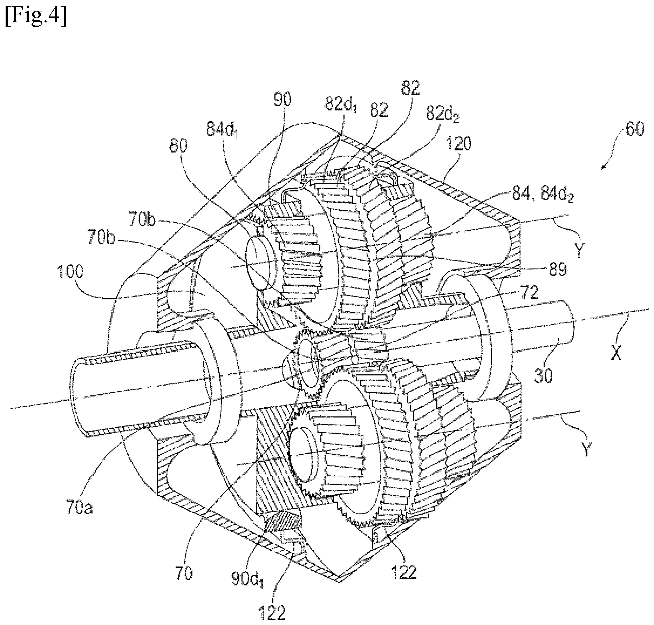

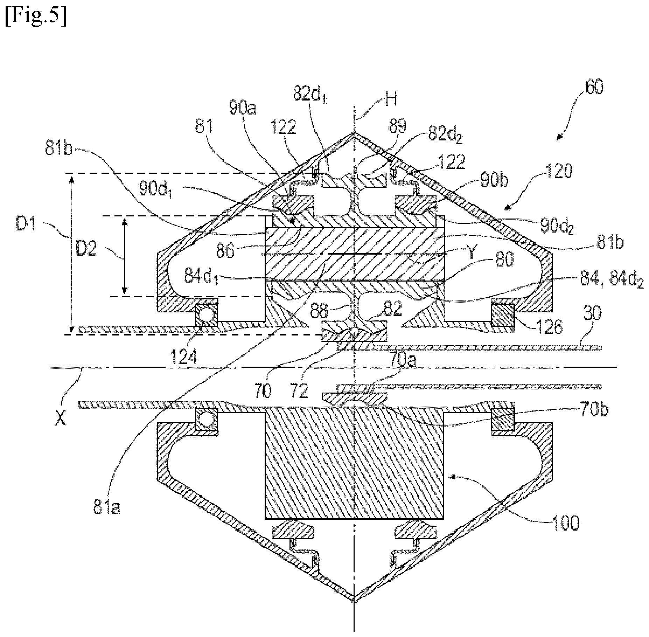

Les figures 4 et 5 montrent un réducteur 60 à double denture symétrique, qui permet de résoudre le problème précité.

Ce réducteur 60 comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Le porte-couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représentent chacun la moyenne entre le diamètre maximal et le diamètre minimal d'une denture de ce satellite. Chaque satellite 80 comprend un manchon cylindrique 86 et un voile annulaire 88 s'étendant sensiblement radialement vers l'extérieur depuis le milieu de ce manchon 86. La denture 84 est séparée en deux séries de dents 84d1, 84d2 en chevron qui sont situées respectivement sur les extrémités axiales du manchon 86. Dans l'exemple représenté qui n'est pas limitatif, la denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y. En variante, la denture 82 pourrait comprendre qu'une seule série de dents, donc sans interruption et sans rainure.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

Chacun des satellites 80 est guidé en rotation par un palier hydrodynamique 81 qui comprend un corps cylindrique 81a qui traverse le satellite 80, et en particulier son manchon 86, et qui est configuré pour former un film d'huile de guidage à l'intérieur du satellite.

Le corps 81a d'un palier 26 s'étend le long de l'axe Y et comprend à ses extrémités longitudinales des extensions 81b logées dans des orifices formant des sièges du porte-satellites 100.

Le corps 81a est en général tubulaire et comprend une cavité interne de circulation d'huile qui communique en général avec des premières canalisations d'amenée d'huile jusqu'à une surface cylindrique externe du corps 81a en vue de la formation du film d'huile entre cette surface et une surface cylindrique interne du satellite 80.

Dans l'exemple représenté à la figure 5 qui illustre l'art antérieur, le palier hydrodynamique et le film d'huile s'étendent sur toute la longueur ou dimension axiale du satellite 80, l'huile de ce palier est évacuée via les extrémités axiales de ce film (c'est-à-dire entre les extrémités axiales surfaces cylindriques du satellite 80 et du corps 81a).

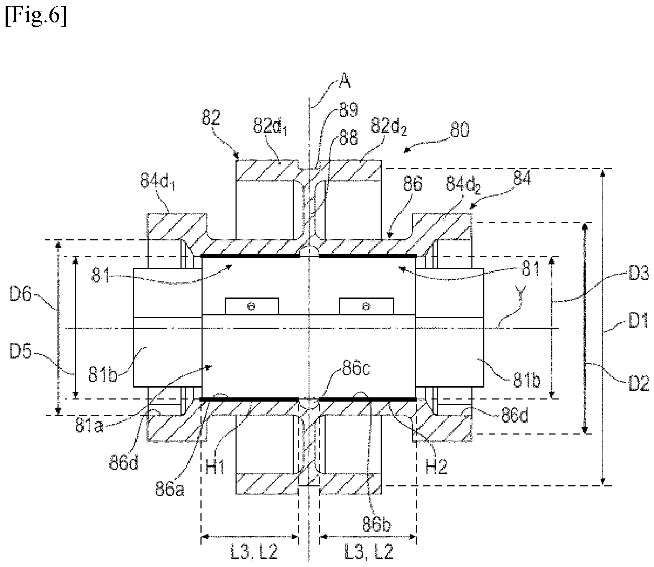

La présente invention propose un perfectionnement à cette technologie dont plusieurs modes de réalisation sont représentés aux figures 6 et suivantes. Le réducteur 60 selon l'invention comprend l'ensemble des caractéristiques décrites dans ce qui précède en relation avec les figures 3, 4 et 5 dans la mesure où elles ne sont pas contraires ou ne contredisent pas ce qui suit.

Les références utilisées dans les figures 6 et suivantes et déjà utilisées dans les figures 3, 4 et 5 désignent donc des éléments identiques ou similaires. Le satellite 80 est du type à double étage d'engrènement et comprend un manchon tubulaire 86 relié par un voile 88 à une première denture 82 externe, le manchon 86 étant lui-même équipé d'une seconde denture 84.

La première denture 82 a un diamètre moyen D1 et engrène avec le solaire 70 précité, et la seconde denture 84 a un diamètre moyen D2, différent de D1 et en particulier inférieur à D1, et engrène avec la couronne 90 précitée. Les diamètres moyens D1 et D2 sont mesurés depuis l'axe Y de chaque satellite 80 et représentent chacun la moyenne entre le diamètre maximal et le diamètre minimal d'une denture de ce satellite.

La denture 84 est séparée en deux séries de dents 84d1, 84d2, par exemple en chevron ou droite, qui sont situées respectivement sur les extrémités axiales du manchon 86. La denture 82 comprend deux séries de dents 82d1, 82d2, par exemple également en chevron ou droite, qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H, de part et d'autre des dents 82d1, 82d2. La description qui suit concerne un satellite 80 et ses paliers hydrodynamiques 81 de guidage mais on comprend qu'elle s'applique à l'ensemble des satellites 80 et paliers hydrodynamiques 81 du réducteur 60. Dans l'exemple représenté, chacun des satellites 80 est guidé en rotation par deux paliers hydrodynamiques 81 qui sont formés par un corps cylindrique 81a qui traverse le satellite 80, et en particulier son manchon 86, et qui est configuré pour former deux films d'huile H1, H2 de guidage à l'intérieur du satellite 80.

Le manchon 86 comprend deux surfaces cylindriques internes 86a, 86b qui s'étendent autour de l'axe Y et sont symétriques par rapport au plan H. Ces surfaces 86a, 86b sont destinées à délimiter extérieurement et respectivement les deux films d'huile H, H2.

Les surfaces 86a, 86b sont séparées l'une de l'autre par une gorge annulaire 86c qui débouche radialement vers l'intérieur par rapport à l'axe Y. Dans l'exemple représenté, cette gorge a en section une forme générale en C ou U mais d'autres formes aussi sont compatibles avec cette invention. La gorge 86c est située dans le plan H et donc au droit du voile 88. Cette gorge 86 permet de générer une certaine souplesse dans le satellite 80.

Le manchon 86 comprend en outre un alésage interne 86d de forme générale cylindrique, à chacune de ses extrémités axiales ou longitudinales. Ces alésages 86d permettent par exemple d'alléger le satellite 80. Chacune des surfaces 86a, 86b s'étend axialement depuis la gorge 86c jusqu'à un de ces alésages 86d. Par ailleurs, comme visible dans les dessins, les surfaces 86a, 86b s'étendent en partie à l'intérieur des séries de dents 82d1, 82d2de la première denture 82.

Chaque surface 86a, 86b a une longueur L3 qui est supérieure à la longueur de chacune des séries de dents 82d1, 82d2, 84d1, 84d2. Les surfaces 86a, 86b ont un diamètre interne D5, qui est inférieur au diamètre interne D6 des alésages 86d. Le diamètre interne D6 de ces alésages 86d est inférieur au diamètre moyen D2 de la seconde denture 85. Par ailleurs, comme visible dans les dessins, les alésages 86d s'étendent en partie à l'intérieur des séries de dents de la seconde denture 84.

Cette configuration du satellite 80 permet de réduire sa masse tout en facilitant la circulation de l'huile.

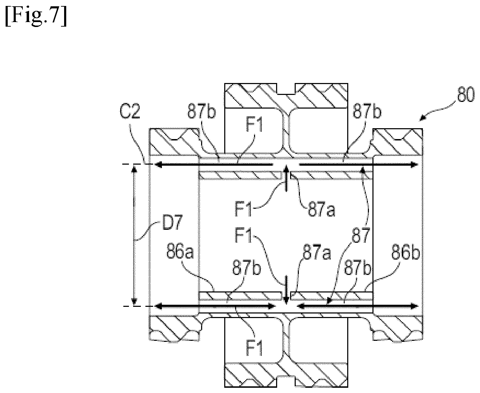

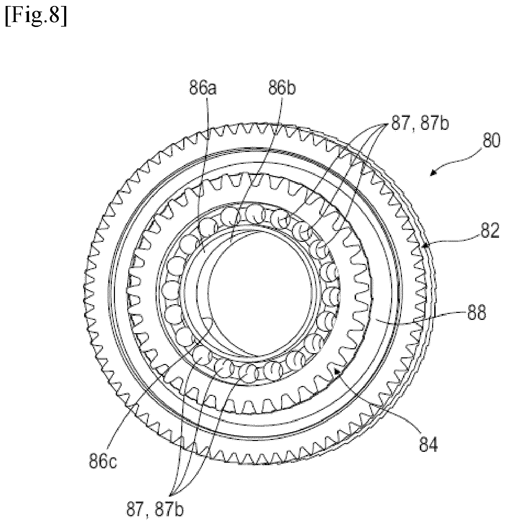

Les figures 7 et 8 montrent que le satellite 80 comprend des canalisations 87 d'évacuation d'huile depuis les surfaces 86a, 86b jusqu'à ses extrémités longitudinales. Ces canalisations 87 sont ici formées dans le manchon 86 et comprennent chacune un orifice radial 87a et au moins une portion rectiligne 87b.

L'orifice radial 87a de chacune des canalisations 87 est formé au fond de la gorge 86c. Les orifices radiaux 87a sont de préférence régulièrement espacés autour de l'axe Y. Chaque orifice 87a est relié au milieu d'une portion rectiligne 87b qui s'étend axialement entre les deux extrémités axiales du manchon 86 et débouchent par exemple au niveau des alésages 86d précités. En variante, chaque orifice 87a est relié aux extrémités de deux portions rectilignes 87b qui s'étendent des deux côtés de la gorge 86c et rejoignent chacune une deux extrémités axiales du manchon 86, par exemple au niveau d'un des alésages 86d. Les portions 87b peuvent être parallèles entre elles et à l'axe Y.

Les portions rectilignes 87b sont situées sur une circonférence C2 centrée sur l'axe Y qui a un diamètre D7. Ce diamètre D7 est supérieur à D5 et inférieur à D6 et D2.

Les flèches F1 à la figure 7 montrent la circulation de l'huile dans ces canalisations 87, et illustrent donc l'évacuation d'huile par l'intermédiaire d'un des satellites 80.

On va maintenant décrire plusieurs variantes de réalisation des paliers hydrodynamiques 81 et en particulier du corps cylindrique 81a, qui peut être associé au satellite 80 des figures 6 à 8 ou à un satellite à double étage différent.

Le corps 81a s'étend le long de l'axe Y et comprend à ses extrémités longitudinales des extensions 81b logées dans des orifices formant des sièges du porte-satellites 100. Comme cela est visible à la figure 6, ces extensions 81b peuvent être en partie logées dans les alésages 86d du manchon 86.

Le corps 81a est en général tubulaire et comprend une cavité interne 81c de circulation d'huile qui communique avec des canalisations 81d d'amenée d'huile jusqu'à des surfaces cylindriques externes 81e du corps 81a en vue de la formation des deux films d'huile H1, H2 entre ces surfaces 81e et les surfaces cylindriques internes 86a, 86b du manchon 86 du satellite 80.

Les surfaces 81e sont à distance axiale l'une de l'autre et séparées l'une de l'autre par une gorge annulaire 81f qui es située au niveau du plan H et débouche radialement vers l'extérieur par rapport audit axe Y. Les surfaces 81e ont un diamètre D3.

Chacune des surfaces 81e a une longueur L2 qui est égale à la longueur L3 de chacune des surfaces 86a, 86b.

Les surfaces 81f s'étendent à l'intérieur des surfaces 86a, 86b pour définir les deux films d'huile H1, H2. Les diamètres D3 et D5 sont donc relativement proches et déterminés pour autoriser entre eux la formation de films d'huile d'épaisseur prédéterminée.

Les deux films d'huile sous pression H1, H2 sont à distance axiale et indépendants l'un de l'autre, en particulier car ils sont alimentés par des canalisations 81d différentes.

Par ailleurs, le corps cylindrique 81a de chacun des satellites 80 comprend des canalisations 83 d'évacuation de l'huile provenant des films H1, H2.

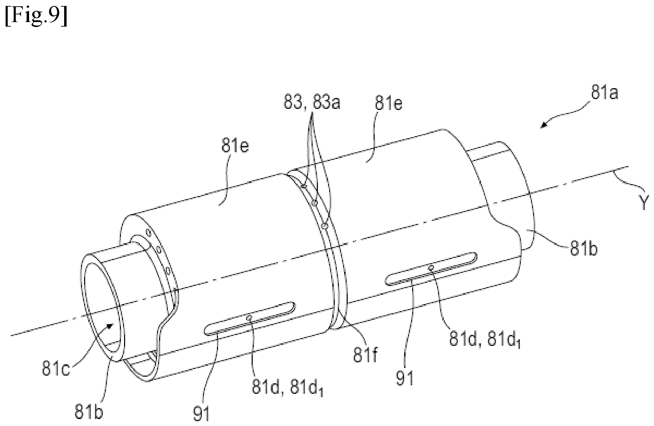

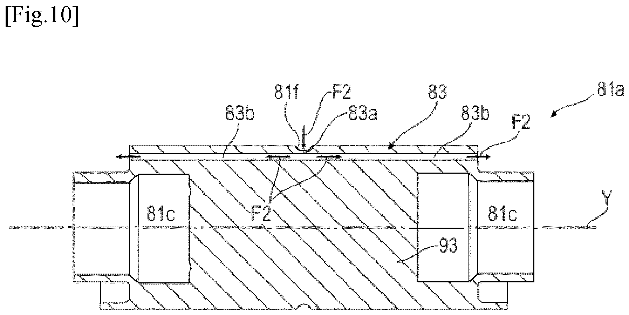

Dans le mode de réalisation des figures 9 et 10, les canalisations 81d comprennent des orifices radiaux 81d1 qui débouchent à leurs extrémités radialement externes sur les surfaces 81e et plus exactement dans des baignoires 91 formées sur ces surfaces 81e. Chacune des baignoires 91 a une forme allongée en direction axiale et s'étend sur plus de la moitié de la longueur L2 de la surface 81e. Au moins un orifice radial 81d1 est formé au fond de cette baignoire 91, sensiblement en son milieu. Les orifices radiaux 8d1 peuvent déboucher directement dans la cavité interne 81c à leurs extrémités radialement internes.

Dans l'exemple représenté, le corps 81a comprend un raidisseur interne 93 dans la cavité 81c, qui est formé d'une seule pièce avec le corps. Bien que cela ne soit pas représenté dans les dessins, les orifices 81d1 peuvent être reliés à la cavité interne 81c du corps, séparée en deux parties par le raidisseur 93, par des portions formées dans le raidisseur 93 et débouchant dans chacune de ces parties de la cavité 81c.

Les canalisations 83 comprennent des orifices radiaux 83a qui sont formés dans la gorge 86c et sont reliés à des portions rectilignes 83b qui s'étendent jusqu'aux extrémités axiales du corps 81a.

Les orifices 83a peuvent être régulièrement espacés autour de l'axe Y ou regroupés dans un secteur angulaire particulier du corps 81a, comme illustré dans le dessin. Chaque orifice 83a est relié au milieu d'une portion rectiligne 83b qui s'étend axialement entre les deux extrémités axiales du corps 81a. En variante, chaque orifice 83a est relié aux extrémités de deux portions rectilignes 83b qui s'étendent des deux côtés de la gorge 81f et rejoignent chacune une des extrémités axiales du corps 81a. Les portions 87b peuvent être parallèles entre elles et à l'axe Y.

Les flèches F2 à la figure 10 montrent la circulation de l'huile dans ces canalisations 87, et illustrent donc l'évacuation d'huile par l'intermédiaire d'un des corps 81a.

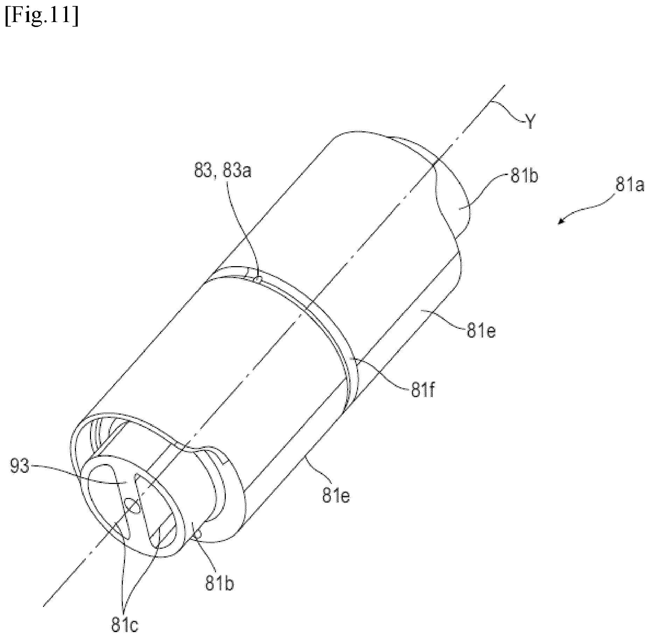

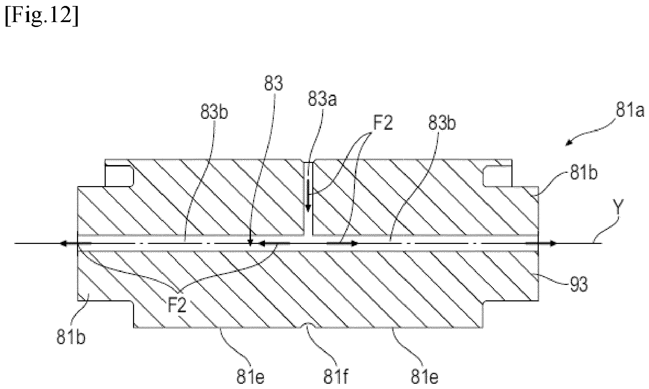

Les figures 11 et 12 montrent une variante de réalisation du corps 81a, qui diffère du précédent mode de réalisation essentiellement en ce que le raidisseur 93 a une forme générale plane et s'étend parallèlement à l'axe Y. Le raidisseur 93 s'étend sur toute la dimension axiale du corps 81a et donc entre les deux extensions 81b.

Les canalisations 87 d'évacuation d'huile des films H1, H2 sont en partie formées dans ce raidisseur 93. La ou les portions rectilignes 87b sont alignées sur l'axe Y et s'étendent sur toute la longueur du raidisseur 93 et donc toute la dimension axiale du corps 81a. Le ou les orifices radiaux 87a ont leurs extrémités radialement externes qui débouchent au fond de la gorge 81f et leurs extrémités radialement internes qui sont reliées à la ou aux portions rectilignes 87b.

Les flèches F2 à la figure 12 montrent la circulation de l'huile dans ces canalisations, et illustrent donc l'évacuation d'huile par l'intermédiaire d'un des corps 81a.

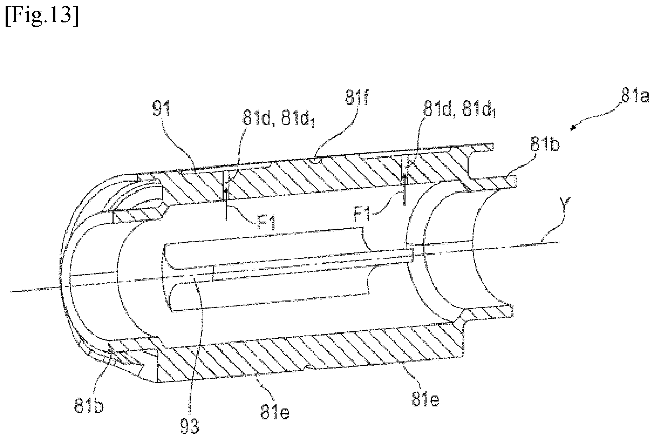

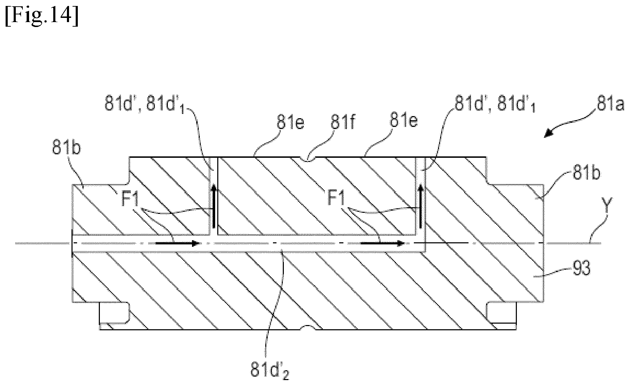

Les figures 13 et 14 montrent une variante de réalisation du corps 81a, qui diffère du mode de réalisation des figures 9 et 10 essentiellement en ce que le raidisseur 93 a une forme générale plane et s'étend parallèlement à l'axe Y. Le raidisseur 93 s'étend sur une partie seulement ou sur la totalité de la dimension axiale du corps.

En plus des canalisations 81d qui alimentent en huile les baignoires, le corps peut comprendre d'autres canalisations d'alimentation 81d' qui sont formées au moins en partie dans le raidisseur 93. Ces canalisations 81d' comprennent des orifices radiaux 81d'1 qui s'étendent depuis les surfaces cylindriques 81e du corps 81a jusqu'à l'axe Y pour être reliés à une ou plusieurs portions rectilignes 81d'2 qui sont formées dans le raidisseur 93 et s'étendent jusqu'à au moins une des extrémités axiales du raidisseur et du corps 81a (figure 14).

Les flèches F1 aux figures 13 et 14 montrent l'alimentation en huile par ces canalisations 81d'.

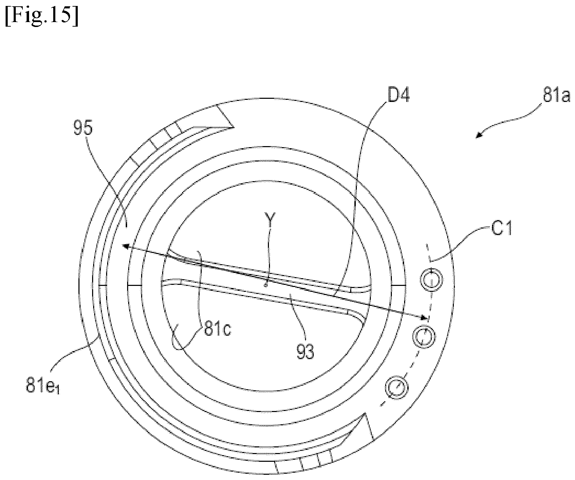

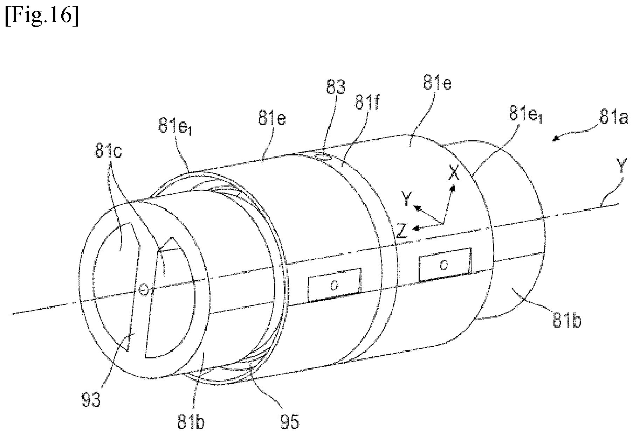

Les figures 15 à 17 montrent d'autres variantes de réalisation d'un corps 81a. Les figures 15 et 16 montrent par exemple que chacune des surfaces cylindriques 81e du corps 81a se prolonge du côté d'une extension 81b pour former une paroi cylindrique 81e1. Le corps cylindrique 81a peut comprendre une rainure annulaire 95 à chacune de ses extrémités longitudinales, qui débouche en direction axiale et qui est délimitée extérieurement par cette paroi cylindrique 81e1. Cette paroi cylindrique 81e1 peut s'étendre en continu sur 360° autour de l'axe Y, comme c'est le cas à la figure 15, ou sur un angle moins important - qui est compris entre 180 et 220° dans le cas de la figure 15.

Par ailleurs, dans la figure 16, les portions rectilignes 87b des canalisations 87 sont situées sur l'axe Y. Dans la figure 15, ces portions rectilignes 87b sont situées sur une circonférence C1 centrée sur l'axe Y qui a un diamètre D4, ce diamètre D4 est inférieur aux diamètres D3 et D5, le diamètre D3 étant équivalent au diamètre externe de la paroi 81e1.

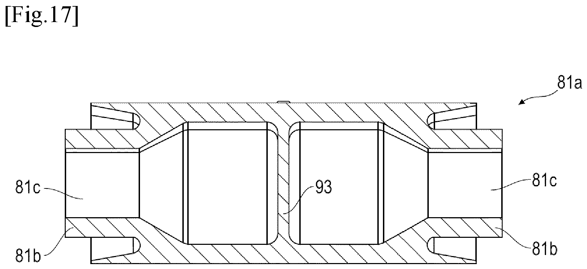

La figure 17 illustre une autre variante dans laquelle le raidisseur 93 est plan mais s'étend perpendiculairement à l'axe Y. Au moins une partie des canalisations 87, 81d, 81d' précitées peut être formée dans ce raidisseur 93.

De manière générale, l'invention permet d'aboutir à un réducteur 60 qui présente un encombrement limité, une masse réduite, une bonne fiabilité, un bon rendement et un débit d'huile suffisant.

L'invention apporte en outre les avantages suivants en ce qui concerne les paliers 81 et les satellites 80 :
- évacuation d'huile améliorée et amélioration géométrique des paliers,
- meilleur comportement des paliers en désalignement,
- rigidité adaptée des paliers pour diminuer la masse tout en restant capable de reprendre la même charge,
- allègement des satellites grâce aux canalisations notamment, et
- souplesse des satellites grâce à la gorge annulaire interne.

## Revendications

1. Réducteur mécanique (60) de turbomachine (1), en particulier d'aéronef, ce réducteur comportant :
- un solaire (70) ayant un premier axe (X) de rotation,
- une couronne (90) qui s'étend autour du solaire (70) et dudit premier axe (X),
- des satellites (80) qui sont engrenés avec le solaire (70) et la couronne (90), chaque satellite (80) ayant un second axe (Y) de rotation et comportant une première denture (82) ayant un premier diamètre moyen (D1) pour l'engrènement avec le solaire (70), et une seconde denture (84) ayant un second diamètre moyen (D2) pour l'engrènement avec la couronne (90), les premier et second diamètres moyens (D1, D2) étant différents,
- des paliers hydrodynamiques (81) de guidage en rotation des satellites (80), ces paliers hydrodynamiques (81) étant portés par un porte-satellites (100) et comprenant des corps cylindriques (81a) qui ont une forme générale allongée le long dudit second axe (Y) et qui sont engagés dans les satellites (80), chacun de ces corps cylindriques (81a) comportant une cavité interne (81c) de circulation d'huile et des première canalisations (81d) d'acheminement d'huile depuis cette cavité (81c) jusqu'à au moins une surface cylindrique externe (81e) du corps s'étendant autour dudit second axe (Y), de façon à former au moins un film d'huile (H1, H2) de guidage du satellite (80) monté sur ce corps,
**caractérisé en ce que** :
chacun des corps cylindriques (81a) comprend en outre des secondes canalisations (87) d'évacuation d'huile, qui sont différentes des premières canalisations (81d), et qui s'étendent depuis ladite au moins une surface cylindrique externe (81e) jusqu'à au moins une des extrémités longitudinales de ce corps (81a).

2. Réducteur mécanique (60) selon la revendication précédente, dans lequel chacun des corps cylindriques (81a) comprend une gorge annulaire externe (81f) qui est située dans ledit plan (H) et qui est située entre deux surfaces cylindriques externes (81e) du corps, lesdites secondes canalisations (87) débouchant au fond de ladite gorge (81f).

3. Réducteur mécanique (60) selon la revendication 2, dans lequel les secondes canalisations (87) comprennent chacune un orifice radial (87a) formé au fond de la gorge (81f), et au moins une portion rectiligne (87b) qui est reliée à cet orifice (87a) et qui s'étend jusqu'à au moins une des extrémités longitudinales du corps.

4. Réducteur mécanique (60) selon la revendication 2, dans lequel la portion rectiligne de chacune des secondes canalisations est parallèle audit second axe ou inclinée par rapport à cet axe.

5. Réducteur mécanique (60) selon la revendication 3 ou 4, dans lequel les portions rectilignes (87b) des secondes canalisations (87) sont situées sur une circonférence (C1) centrée sur ledit second axe (Y), qui a un diamètre (D4) supérieur à un diamètre maximal (D5) de ladite cavité (81c).

6. Réducteur mécanique (60) selon l'une des revendication 3 à 5, dans lequel chacun des corps cylindriques (81a) comprend une rainure annulaire (95) à chacune de ses extrémités longitudinales, ces rainures annulaires (95) débouchant en direction axiale et les portions rectilignes (87b) des secondes canalisations (87) débouchant au fond de ces rainures.

7. Réducteur mécanique (60) selon l'une des revendications précédentes, dans lequel chacun des corps cylindriques (81a) comprend au moins un raidisseur interne (93) dans ladite cavité (81c), qui est parallèle ou perpendiculaire audit second axe (Y).

8. Réducteur mécanique (60) selon la revendication 2, dans lequel les secondes canalisations (87) comprennent chacune un orifice radial (87a) formé au fond de la gorge (81f) et s'étendant jusqu'audit second axe (Y), et une portion rectiligne (87b) qui est relié à cet orifice (87a) et s'étend jusqu'à au moins une des extrémités longitudinales du corps (81a).

9. Réducteur mécanique (60) selon l'ensemble des revendications 7 et 8, dans lequel l'orifice radial (87a) et la portion rectiligne (87b) de chacune des secondes canalisations (87) sont au moins en partie formés dans ledit raidisseur (93).

10. Réducteur mécanique (60) selon l'une des revendications précédentes, dans lequel les premières canalisations (81d) sont symétriques par rapport audit plan (H) de façon à générer deux films d'huile (H1, H2) de guidage du satellite (80) sur chaque corps (81a).

11. Réducteur mécanique (60) selon l'une des revendications précédentes, dans lequel chacun des satellites (80) comprend un manchon (86) cylindrique qui a une forme générale allongée le long dudit second axe (Y) et un voile (88) annulaire s'étendant sensiblement radialement vers l'extérieur depuis le milieu de ce manchon (86), des dents (84d1, 84d2) de la seconde denture (84) étant situées aux extrémités axiales du manchon (86), et des dents (82d1, 82d2) de la première denture (82) étant situées à la périphérie externe du voile (88).

12. Réducteur mécanique (60) selon la revendication précédente, dans lequel le manchon (86) comprend deux surfaces cylindriques internes (86a, 86b) de guidage séparées l'une de l'autre par une gorge annulaire interne (86c) située sensiblement dans ledit plan (H).

13. Réducteur mécanique (60) selon la revendication 12, dans lequel le manchon (86) comprend des canalisations (87) d'évacuation d'huile qui comprennent chacune un orifice radial (87a) formé au fond de la gorge (86c), et au moins une portion rectiligne (87b) qui est reliée à cet orifice (87a) et s'étend jusqu'à au moins une des extrémités longitudinales du manchon (86).

14. Réducteur mécanique (60) selon la revendication 12 ou 13, dans lequel le manchon (86) comprend un alésage cylindrique (86d) à chacune de ses extrémités longitudinales, ces alésages (86d) étant symétriques par rapport audit plan (H) et comportant un diamètre interne (D6) qui est supérieur au diamètre interne (D5) desdites surfaces cylindriques internes (86a, 86b).

15. Réducteur mécanique (60) selon la revendication 14, en dépendance de la revendication 13, dans lequel les portions rectilignes (87b) des canalisations (87) sont situées sur une circonférence (C2) centrée sur ledit second axe (Y), qui a un diamètre (D7) supérieur au diamètre interne (D5) des surfaces cylindriques internes (86a, 86b) et inférieur audit second diamètre moyen (D2).

16. Réducteur mécanique (60) selon la revendication 14 ou 15, dans lequel les deux séries de dents (84d1, 84d2) de la seconde denture (84) sont disposées respectivement autour desdits alésages (86d).

17. Réducteur mécanique (60) selon l'une des revendications précédentes, dans lequel chacun des satellites est guidé par deux paliers hydrodynamiques indépendants l'un de l'autre et disposés de part et d'autre dudit plan

18. Turbomachine (1), en particulier d'aéronef, comportant un réducteur mécanique (60) selon l'une des revendications précédentes.

## Patentansprüche

1. Mechanisches Untersetzungsgetriebe (60) für ein Turbotriebwerk (1), insbesondere eines Luftfahrzeugs, wobei dieses Untersetzungsgetriebe umfasst:
- ein Sonnenrad (70), das eine erste Drehachse (X) aufweist,
- eine Krone (90), die sich um das Sonnenrad (70) und um die erste Achse (X) erstreckt,
- Planeten (80), die mit dem Sonnenrad (70) und der Krone (90) in Eingriff stehen, wobei jeder Planet (80) eine zweite Drehachse (Y) aufweist und eine erste Verzahnung (82) umfasst, die einen ersten mittleren Durchmesser (D1) zum Eingriff mit dem Sonnenrad (70) aufweist, und eine zweite Verzahnung (84), die einen zweiten mittleren Durchmesser (D2) zum Eingriff mit der Krone (90) aufweist, wobei sich der erste und der zweite mittlere Durchmesser (D1, D2) voneinander unterscheiden,
- hydrodynamische Lager (81) zur drehenden Führung der Planeten (80), wobei diese hydrodynamischen Lager (81) von einem Planetenträger (100) getragen werden und zylindrische Körper (81a) umfassen, die eine allgemeine entlang der zweiten Achse (X) langgestreckte Form aufweisen und die mit den Planeten (80) in Eingriff stehen, wobei jeder dieser zylindrischen Körper (81a) einen inneren Hohlraum (81c) zur Zirkulation von Öl und erste Leitungen (81d) zur Zuführung von Öl ausgehend von diesem Hohlraum (81c) bis zu mindestens einer zylindrischen Außenfläche (81e) des Körpers, die sich um die zweite Achse (Y) erstreckt, umfasst, sodass mindestens ein Ölfilm (H1, H2) zur Führung des an diesem Körper angebrachten Planeten (80) gebildet wird, **dadurch gekennzeichnet, dass**:
jeder der zylindrischen Körper (81a) weiter zweite Ölablassleitungen (87) umfasst, die sich von den ersten Leitungen (81d) unterscheiden und die sich ausgehend von der mindestens einen zylindrischen Außenfläche (81e) bis zu mindestens einem der Längsenden dieses Körpers (81a) erstrecken.

2. Mechanisches Untersetzungsgetriebe (60) nach dem vorstehenden Anspruch, wobei jeder der zylindrischen Körper (81a) eine ringförmige äußere Keilrille (81 f) umfasst, die in der Ebene (H) gelegen ist und die zwischen zwei zylindrischen Außenflächen (81e) des Körpers gelegen ist, wobei die zweiten Leitungen (87) zum Boden der Keilrille (81f) führen.

3. Mechanisches Untersetzungsgetriebe (60) nach Anspruch 2, wobei die zweiten Leitungen (87) jeweils eine radiale Öffnung (87a) umfassen, die im Boden der Keilrille (81f) gebildet ist, und mindestens einen geradlinigen Abschnitt (87b), der mit dieser Öffnung (87a) verbunden ist und der sich bis zu mindestens einem der Längsenden des Körpers erstreckt.

4. Mechanisches Untersetzungsgetriebe (60) nach Anspruch 2, wobei der geradlinige Abschnitt (87b) jeder der zweiten Leitungen parallel zur zweiten Achse oder in Bezug auf diese Achse geneigt ist.

5. Mechanisches Untersetzungsgetriebe (60) nach Anspruch 3 oder 4, wobei die geradlinigen Abschnitte (87b) der zweiten Leitungen (87) auf einem Umfang (C1) gelegen sind, der auf der zweiten Achse (Y) zentriert ist und der einen Durchmesser (D4) aufweist, der größer ist als ein maximaler Durchmesser (D5) des Hohlraums (81c).

6. Mechanisches Untersetzungsgetriebe (60) nach einem der Ansprüche 3 bis 5, wobei jeder der zylindrischen Körper (81a) eine ringförmige Nut (95) an jedem seiner Längsenden umfasst, wobei diese ringförmigen Nuten (95) in axialer Richtung führen und die geradlinigen Abschnitte (87b) der zweiten Leitungen (87) zum Boden dieser Nuten führen.

7. Mechanisches Untersetzungsgetriebe (60) nach einem der vorstehenden Ansprüche, wobei jeder der zylindrischen Körper (81a) mindestens eine innere Versteifung (93) im Hohlraum (81c) umfasst, die parallel oder senkrecht zur zweiten Achse (Y) ist.

8. Mechanisches Untersetzungsgetriebe (60) nach Anspruch 2, wobei die zweiten Leitungen (87) jeweils eine radiale Öffnung (87a) umfassen, die im Boden der Keilrille (81f) gebildet ist und sich bis zur zweiten Achse (Y) erstreckt, und einen geradlinigen Abschnitt (87b), der mit dieser Öffnung (87a) verbunden ist und sich bis zu mindestens einem der Längsenden des Körpers (81a) erstreckt.

9. Mechanisches Untersetzungsgetriebe (60) nach der Gesamtheit der Ansprüche 7 und 8, wobei die radiale Öffnung (87a) und der geradlinige Abschnitt (87b) jeder der zweiten Leitungen (87) zumindest teilweise in der Versteifung (93) gebildet sind.

10. Mechanisches Untersetzungsgetriebe (60) nach einem der vorstehenden Ansprüche, wobei die ersten Leitungen (81d) in Bezug auf die Ebene (H) symmetrisch sind, sodass auf jedem Körper (81a) zwei Ölfilme (H1, H2) zur Führung des Planeten (80) erzeugt werden.

11. Mechanisches Untersetzungsgetriebe (60) nach einem der vorstehenden Ansprüche, wobei jeder der Planeten (80) eine zylindrische Muffe (86) umfasst, die eine allgemeine entlang der zweiten Achse (Y) langgestreckte Form aufweist, und eine ringförmige Bahn (88), die sich ausgehend von der Mitte dieser Muffe (86) im Wesentlichen radial nach außen erstreckt, wobei Zähne (84d1, 84d2) der zweiten Verzahnung (84) an den axialen Enden der Muffe (86) gelegen sind, und Zähne (82d1, 82d2) der ersten Verzahnung (82) am Außenumfang der Bahn (88) gelegen sind.

12. Mechanisches Untersetzungsgetriebe (60) nach dem vorstehenden Anspruch, wobei die Muffe (86) zwei durch eine innere ringförmige Keilrille (86c), die im Wesentlichen in der Ebene (H) gelegen ist, voneinander getrennte zylindrische Innenflächen (86a, 86b) zur Führung umfasst.

13. Mechanisches Untersetzungsgetriebe (60) nach Anspruch 12, wobei die Muffe (86) Ölablassleitungen (87) umfasst, die jeweils eine radiale Öffnung (87a) umfassen, die im Boden der Keilrille (86c) gebildet ist, und mindestens einen geradlinigen Abschnitt (87b), der mit dieser Öffnung (87a) verbunden ist und sich bis zu mindestens einem der Längsenden der Muffe (86) erstreckt.

14. Mechanisches Untersetzungsgetriebe (60) nach Anspruch 12 oder 13, wobei die Muffe (86) eine zylindrische Bohrung (86d) an jedem ihrer Längsenden umfasst, wobei diese Bohrungen (86d) in Bezug auf die Ebene (H) symmetrisch sind und einen Innendurchmesser (D6) aufweisen, der größer ist als der Innendurchmesser (D5) der zylindrischen Innenflächen (86a, 86d).

15. Mechanisches Untersetzungsgetriebe (60) nach Anspruch 14, in Abhängigkeit von Anspruch 13, wobei die geradlinigen Abschnitte (87b) der Leitungen (87) auf einem Umfang (C2) gelegen sind, der auf der zweiten Achse (Y) zentriert ist und der einen Durchmesser (D7) aufweist, der größer ist als der Innendurchmesser (D5) der zylindrischen Innenflächen (86a, 86d) und kleiner ist als der zweite mittlere Durchmesser (D2).

16. Mechanisches Untersetzungsgetriebe (60) nach Anspruch 14 oder 15, wobei die zwei Zahnreihen (84d1, 84d2) der zweiten Verzahnung (84) jeweils um die Bohrungen (86d) herum angeordnet sind.

17. Mechanisches Untersetzungsgetriebe (60) nach einem der vorstehenden Ansprüche, wobei jeder der Planeten durch zwei hydrodynamische Lager geführt wird, die unabhängig voneinander sind und beiderseits der Ebene angeordnet sind.

18. Turbotriebwerk (1), insbesondere eines Luftfahrzeugs, das ein mechanisches Untersetzungsgetriebe (60) nach einem der vorstehenden Ansprüche umfasst.

## Claims

1. A mechanical reducer (60) for a turbomachine (1), in particular for an aircraft, this reducer comprising:
- a sun gear (70) having a first axis (X) of rotation,
- a ring gear (90) extending around the sun gear (70) and said first axis (X),
- planet gears (80) which are meshed with the sun gear (70) and the ring gear (90), each planet gear (80) having a second axis (Y) of rotation and comprising a first toothing (82) having a first average diameter (D1) for meshing with the sun gear (70), and a second toothing (84) having a second average diameter (D2) for meshing with the ring gear (90), the first and second average diameters (D1, D2) being different,
- hydrodynamic bearings (81) for guiding the planet gears (80) in rotation, these hydrodynamic bearings (81) being carried by a planet carrier (100) and comprising cylindrical bodies (81a) which have a generally elongated shape along said second axis (Y) and which are engaged in the planet gears (80), each of these cylindrical bodies (81a) comprising an internal oil circulation cavity (81c) and first pipelines (81d) for conveying oil from this cavity (81c) to at least one external cylindrical surface (81e) of the body extending around said second axis (Y), so as to form at least one oil film (H1, H2) for guiding the planet gear (80) mounted on this body,
**characterised in that**:
each of the cylindrical bodies (81a) further comprises second oil evacuation pipelines (87), which are different from the first pipelines (81d), and which extend from said at least one external cylindrical surface (81e) to at least one of the longitudinal ends of that body (81a).

2. The mechanical reducer (60) according to the preceding claim, wherein each of the cylindrical bodies (81a) comprises an external annular gorge (81f) which is located in said plane (H) and which is located between two external cylindrical surfaces (81e) of the body, said second pipelines (87) opening at the bottom of said gorge (81f).

3. The mechanical reducer (60) according to claim 2, wherein the second pipelines (87) each comprise a radial orifice (87a) formed at the bottom of the gorge (81f), and at least one straight segment (87b) which is connected to this orifice (87a) and which extends to at least one of the longitudinal ends of the body.

4. The mechanical reducer (60) as claimed in claim 2, wherein the straight segment of each of the second pipelines is parallel to said second axis or inclined to this axis.

5. The mechanical reducer (60) according to claim 3 or 4, wherein the straight segments (87b) of the second pipelines (87) are located on a circumference (C1) centred on said second axis (Y), which has a diameter (D4) greater than a maximum diameter (D5) of said cavity (81c).

6. The mechanical reducer (60) according to one of claims 3 to 5, wherein each of the cylindrical bodies (81a) comprises an annular groove (95) at each of its longitudinal ends, these annular grooves (95) opening out in the axial direction and the straight segments (87b) of the second pipelines (87) opening out at the bottom of these grooves.

7. The mechanical reducer (60) according to any of the preceding claims, wherein each of the cylindrical bodies (81a) comprises at least one internal stiffener (93) in said cavity (81c), which is parallel or perpendicular to said second axis (Y).

8. The mechanical reducer (60) according to claim 2, wherein the second pipelines (87) each comprise a radial orifice (87a) formed at the bottom of the gorge (81f) and extending to said second axis (Y), and a straight segment (87b) which is connected to this orifice (87a) and extends to at least one of the longitudinal ends of the body (81a).

9. The mechanical reducer (60) according to all of claims 7 and 8, wherein the radial orifice (87a) and the straight segment (87b) of each of the second pipelines (87) are at least partly formed in said stiffener (93).

10. The mechanical reducer (60) according to one of the preceding claims, wherein the first pipelines (81d) are symmetrical with respect to said plane (H) so as to generate two oil films (H1, H2) for guiding the planet gear (80) on each body (81a).

11. The mechanical reducer (60) according to any of the preceding claims, wherein each of the planet gears (80) comprises a cylindrical sleeve (86) which is generally elongate along said second axis (Y) and an annular web (88) extending substantially radially outwardly from the middle of that sleeve (86), teeth (84d1, 84d2) of the second toothing (84) being located at the axial ends of the sleeve (86), and teeth (82d1, 82d2) of the first toothing (82) being located at the external periphery of the web (88).

12. The mechanical reducer (60) according to the preceding claim, wherein the sleeve (86) comprises two internal cylindrical guiding surfaces (86a, 86b) separated from each other by an internal annular gorge (86c) located substantially in said plane (H).

13. The mechanical reducer (60) according to claim 12, wherein the sleeve (86) comprises oil evacuation pipelines (87) which each comprise a radial orifice (87a) formed at the bottom of the gorge (86c), and at least one straight segment (87b) which is connected to this orifice (87a) and extends to at least one of the longitudinal ends of the sleeve (86).

14. The mechanical reducer (60) according to claim 12 or 13, wherein the sleeve (86) comprises a cylindrical bore (86d) at each of its longitudinal ends, these bores (86d) being symmetrical with respect to said plane (H) and comprising an internal diameter (D6) which is greater than the internal diameter (D5) of said internal cylindrical surfaces (86a, 86b).

15. The mechanical reducer (60) according to claim 14, in dependence on claim 13, wherein the straight segments (87b) of the pipelines (87) are located on a circumference (C2) centred on said second axis (Y), which has a diameter (D7) greater than the internal diameter (D5) of the internal cylindrical surfaces (86a, 86b) and less than said second average diameter (D2).

16. The mechanical reducer (60) according to claim 14 or 15, wherein the two series of teeth (84d1, 84d2) of the second toothing (84) are arranged respectively around said bores (86d).

17. The mechanical reducer (60) according to one of the preceding claims, wherein each of the planet gears is guided by two hydrodynamic bearings independent of each other and arranged on either side of said plane.

18. A turbomachine (1), in particular for aircraft, comprising a mechanical reducer (60) according to one of the preceding claims.
